# FASCICULE DE BREVET EUROPEEN

(11) **EP 1 501 241 B1**
(45) Date de publication et mention de la délivrance du brevet: **15.12.2010**
(21) Numéro de dépôt: 04291563.7
(22) Date de dépôt: 21.06.2004
(51) Int. Cl.: H04L 12/24

(54) **Procédé d'approvisionnement de règles de politique dans un réseau géré à base de règles de politique**
Verfahren zur Bereitstellung von Policy-Regeln in einem Policy-Regel basierten Netzwerk
Method for supplying policy-rules to a policy-rule based managed network

(30) Priorité: 18.07.2003 FR 0308772
(43) Date de publication de la demande: 26.01.2005
(73) Titulaire: Alcatel Lucent, 75008 Paris (FR)
(72) Inventeur: Edwiges, Maurice, 91280 St. Pierre du Perray (FR); Robinson, Julien, 75014 Paris (FR)
(74) Mandataire: Chaffraix, Sylvain

(56) Documents cités:
- GB-A- 2 354 350
- GB-A- 2 371 646
- CHAN K ET AL: "COPS Usage for Policy Provisioning (COPS-PR)" IETF RFC, mars 2001 (2001-03), pages 1-24, XP002183187 Extrait de l'Internet: URL:http://www.faqs.org/rfcs/rfc3084.html> [extrait le 2001-11-16]
- DURHAM D ET AL: "RFC 2748 - The COPS (Common Open Policy Service) Protocol" IETF RFC, janvier 2000 (2000-01), pages 1-38, XP002217422 Extrait de l'Internet: URL:http://www.watersprings.org/pub/rfc/rf c2748.txt> [extrait le 2002-10-18]

## Description

L'invention concerne un procédé de transaction pour un approvisionnement de règles dans un réseau géré à base de règles, notamment un réseau utilisant le protocole IP (d'après la terminologie anglaise « Internet Protocol ») et le protocole de gestion COPS (de « Common Open Policy Service Protocol »)

On connaît les réseaux IP et le protocole de contrôle de transmission ou TCP (« Transmission Control Protocol »).

On connaît par ailleurs la gestion (ou administration) de réseaux à base de politiques (ou règles) ou PBM (de l'anglais « policy-based management »), c'est-à-dire un mode de gestion de réseau dans lequel un serveur transmet à des appareils clients les règles qu'ils sont chargés de mettre en application, afin d'optimiser la transmission des données et d'améliorer la qualité de service. Etant donné qu'une politique comprend un ensemble de règles, on utilisera par la suite indifféremment les terminologies « gestion de réseaux à base de politiques » ou « gestion de réseaux à base de règles ». La gestion de réseau à base de règles utilise généralement le protocole COPS mais peut aussi admettre le protocole LDAP (« Lightweight Directory Access Protocol ») pour aller chercher des règles de provision depuis PEP PDP.

Le protocole COPS est un protocole de gestion de réseau IP, de type requête/réponse et est fondé sur le protocole TCP. Il a été proposé par l'IETF (« Internet Engineering Task Force ») pour transporter des règles ou politiques dans le contexte de réseaux à base de règles (Yavatkar R., Pendarakis D., Guerin R., "A Framework for Policy Based Admission Control", RFC 2753, 2000). Le protocole COPS propose un modèle d'échange de règles entre des éléments équipant le réseau. Ces règles ont par exemple pour but d'assurer une meilleure gestion des trafics sur le réseau et, en particulier, d'améliorer la qualité de service fournie sur le réseau. Ce modèle utilise une architecture de type client/serveur. Un serveur de régies ou PDP (« Policy Décision Point ») est un équipement de gestion de réseau qui élabore des règles de gestion des trafics et transmet ces règles à des clients à partir d'informations centralisées dans une base de données. Un client de serveur de règles ou PEP ( « Policy Enforcement Point») est un équipement situé à un noeud du réseau. Il reçoit des informations transmises par un serveur de règles et est chargé de leur mise en application. Ces clients de serveur ou PEP sont généralement des routeurs, des commutateurs ou des pare-feu (« firewall ») mais peuvent également être eux-mêmes des serveurs communiquant avec des éléments de réseau tels que des routeurs, des commutateurs, des ordinateurs etc.

La gestion de réseaux à base de règles utilise des règles définissant le comportement du réseau. La mise en application de ces règles implique elle-même la définition de rôles joués par chacun des éléments du réseau et, éventuellement, joués par des agents du réseau. On appelle agent une entité physique ou virtuelle possédant des ressources propres, étant capable de percevoir et d'agir sur son environnement comme par exemple communiquer directement avec d'autres agents. Ces agents sont répartis parmi des éléments de réseau tels que des routeurs, des commutateurs, des ordinateurs etc., susceptibles d'être géré localement par un PEP. Un même rôle peut être attribué à un groupe d'éléments ou d'agents, c'est-à-dire qu'il existe toujours au moins un élément ou agent ayant un tel rôle. Parmi les rôles types, il existe des rôles commerciaux (« business role »), financiers (« finantial role »), etc. De plus, une ou plusieurs règle(s) peu(ven)t être associée(s) à un rôle. La définition de ces rôles est importante car elle détermine la partie du réseau concernée par la ou les règle(s) correspondante(s).

L'approvisionnement de services est une opération qui consiste à fournir à un élément ou un agent du réseau les ressources nécessaires lui permettant d'avoir accès à des services de télécommunication. Sans une gestion de réseau par régies, des opérateurs de réseau doivent configurer !e réseau élément par élément ou agent par agent, afin de fournir un service à un client. Dans ce cas, si une erreur se produit ou si une opération échoue lors de l'approvisionnement, un opérateur a la possibilité de renverser manuellement les ordres d'approvisionnement et de résoudre le problème.

Alternativement, cet approvisionnement peut être géré localement depuis un PEP vers un élément ou agent. Lorsque l'on utilise le concept de rôles, l'approvisionnement de services d'un agent ou d'un élément du réseau dépend du rôle qui lui est attribué. Tous les agents ou éléments ayant un même rôle peuvent alors automatiquement bénéficier d'un même type d'approvisionnement. Cependant, si une erreur se produit ou si une opération échoue lors de l'approvisionnement de services de multiples agents du réseau, il devient alors nécessaire de désapprovisionner tous les éléments déjà approvisionnés.

Une solution connue à ce problème est le désapprovisionnement manuel de tous les agents par un opérateur. Il convient cependant d'éviter de fréquemment configurer ou changer la configuration des éléments du réseau car de telles opérations dégradent les performances du réseau et impliquent en outre un investissement en termes de temps et d'opérateurs très important.

Des solutions ont également été proposées pour sécuriser l'approvisionnement dans un élément. Une telle solution est par exemple décrite dans la demande de brevet britannique UK 2 371 646. Selon cette solution, un élément vérifie l'approvisionnement demandé avant de le déployer. Il dispose pour ce faire d'une mémoire lui permettant de restaurer la configuration d'origine en cas de problème, ou bien d'une architecture redondante où un module est actif tandis qu'un deuxième est prêt à devenir actif lorsque le premier est sujet à problème.

Cette solution ne convient toutefois pas pour au moins deux raisons : d'une part, elle nécessite une architecture complexe des éléments, et donc une élévation du coût, ainsi que des mécanismes complexes à mettre en oeuvre au sein des éléments. D'autre part, elle ne concerne que chaque élément pris individuellement. Autrement dit, chaque élément vérifie lui-même si l'approvisionnement se déroule correctement ou non, et aucun moyen n'est donc prévu pour s'assurer que l'ensemble des éléments (ou agents) ayant un même rôle peuvent correctement mettre en oeuvre l'approvisionnement. On retrouve donc le même inconvénient majeur précédemment décrit : en cas de problème sur un élément, il peut être nécessaire de désapprovisionner un grand nombre d'éléments ou d'agents.

Il existe donc un besoin pour un procédé d'approvisionnement permettant d'éviter le désapprovisionnement d'élément dans un réseau.

L'invention propose ainsi un procédé de transaction pour un approvisionnement de règles dans un réseau comprenant un serveur de règles et un client de serveur, le procédé de transaction comprenant les étapes : (a) d'envoi depuis le serveur vers le client d'une requête en acceptation d'un approvisionnement d'un ensemble de règles ; (b) si la requête est acceptée par le client, de réservation par le client des ressources nécessaires à la réception et à la mise en application des règles ; (c) de réponse à la requête, du client au serveur ; et (d) si la réponse de l'étape (c) est favorable, d'approvisionnement de l'ensemble de règles depuis le serveur au client.

Dans des modes de réalisation préférés, l'invention comprend une ou plusieurs des caractéristiques suivantes :
- dans un réseau comprenant plusieurs clients, les étapes (a), (b) et (c) du procédé selon l'invention sont effectuées pour chacun des clients, répondant chacun à la requête du serveur lors de l'étape (c), et l'étape (d) d'approvisionnement n'est effectuée que si chaque réponse de client est favorable ;
- le procédé selon l'invention comprend en outre une étape (e) de libération des ressources réservées par les clients à l'étape (b) si une réponse de client n'est pas favorable ;
- le procédé selon l'invention comprend en outre une étape (c') d'envoi d'un message d'erreur depuis le client au serveur si la réponse à la requête n'est pas favorable ;
- dans un réseau comprenant en outre un gestionnaire de règles, le procédé selon l'invention comprend en outre une étape (c") d'envoi depuis le serveur vers le gestionnaire de règles d'un message comprenant au moins une partie d'information contenue dans le message d'erreur envoyé à l'étape (c') ;
- dans un réseau comprenant en outre plusieurs éléments de réseaux, clients du client de serveur, et un gestionnaire d'éléments de réseaux, la réservation des ressources par le client à l'étape (b) est effectuée suite à une étape préalable (a') de communication entre le client de serveur et le gestionnaire d'éléments de réseaux ;
- le gestionnaire d'éléments de réseaux faisant partie intégrante du client de serveur, l'étape (a') de communication est une opération interne au client de serveur.

L'invention a également pour objet un serveur de règles disposant de moyens pour mettre en oeuvre un tel procédé.

L'invention est maintenant décrite plus en détails dans la description qui suit d'un mode de réalisation préféré actuel, donnés à titre d'exemple uniquement et en références aux dessins annexés, qui montrent :
- Figure 1 : un organigramme illustrant des étapes du procédé selon l'invention, impliquant un serveur et un client de serveur ; et
- Figure 2 : un organigramme illustrant des étapes du procédé selon l'invention, impliquant un serveur et plusieurs clients de serveur.

L'invention propose un procédé de transaction pour un approvisionnement de règles dans un réseau. Ce réseau comprend au moins un serveur de règles (un PDP) et au moins un client de serveur de règles (un PEP). Le procédé de transaction selon l'invention comprend une première étape d'envoi depuis le serveur vers le client d'une requête en acceptation d'un approvisionnement d'un ensemble de règles. Le procédé comprend une deuxième étape de réservation par le client des ressources nécessaires à la réception et à la mise en application des règles si la requête est acceptée par le client. Le procédé comprend une troisième étape de réponse à la requête, du client au serveur et une quatrième étape d'approvisionnement de l'ensemble de règles depuis le serveur au client si la réponse du client à la requête est favorable. Ainsi, l'approvisionnement ne peut être effectué que s'il a préalablement été vérifié par le client que les ressources nécessaires à la réception et à la mise en application des règles étaient bien disponibles. On évite ainsi un échec ou une erreur pendant ou après l'approvisionnement, qui nécessiterait une opération de désapprovisionnement inutilement longue et coûteuse. En outre, l'utilisation d'un mécanisme de transaction portant un ensemble de règles garanti l'atomicité de la transaction, tant lors de la réponse du client à la requête que lors de l'approvisionnement du client par le serveur. Le procédé d'approvisionnement permet ainsi d'éviter le désapprovisionnement d'élément dans le réseau. Lorsque le réseau comprenant plusieurs clients, chacun des clients répond à la requête du serveur et l'étape d'approvisionnement n'est effectuée que si chaque réponse de client est favorable. Le procédé d'approvisionnement permet ainsi d'éviter le désapprovisionnement de plusieurs clients si l'un d'entre eux répond non favorablement.

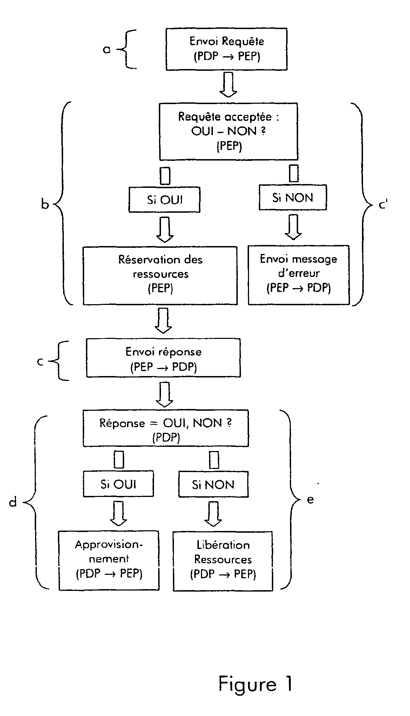

La figure 1 est un organigramme illustrant des étapes du procédé selon l'invention, impliquant dans cet exemple un serveur et un client de serveur. Ce serveur et ce client de serveur forment un réseau qui présente donc une architecture de type client/serveur. Le procédé selon l'invention va maintenant être décrit en référence à l'exemple illustré sur la figure 1 .

Le procédé selon l'invention comprend une première étape a d'envoi, depuis le serveur vers le client de serveur, d'une requête en acceptation d'un approvisionnement d'un ensemble de règles. La requête vise ainsi une transaction portant sur un ensemble de règles. On entend par-là qu'elle comprend des caractéristiques générales de cet ensemble (par exemple les ressources nécessaires à la réception puis, éventuellement, à la mise en application ou l'exécution de ces règles). Pour autant, la requête ne comprend pas la totalité du code et/ou des données nécessaires à la mise en application ou l'exécution de ces règles.

Le procédé comprend une deuxième étape b de réservation par le client des ressources nécessaires à la réception et à la mise en application des règles si la requête est acceptée par le client. Par exemple, le principe applicable peut être le suivant : la requête est acceptée par le PEP lorsque les ressources disponibles dans une partie locale de réseau gérée par le PEP sont suffisantes pour permettre une réception et une mise en application/exécution de ces règles. La réservation de ressources est donc adaptée à la requête.

Le procédé comprend alors une troisième étape c de réponse à la requête, du client au serveur. Dans le présent mode de réalisation, la réponse est explicite, c'est-à-dire que le PEP envoi une réponse au PDP.

Par exemple, le client peut affecter la valeur OUI ou toute autre valeur logique (par exemple un, oui, vrai etc.) à un booléen et réserver des ressources adaptées à la requête si la requête est acceptée par le client ou PEP. Le procédé comprend alors une étape c d'envoi du booléen depuis le client au serveur. La transaction est alors validée par le PDP lorsque la valeur du booléen est OUI (quatrième étape d). La validation de la transaction se traduit par un approvisionnement (par exemple un téléchargement) de l'ensemble de règles (y compris leur contenu) regroupées dans l'ensemble visé par la requête en vue d'une mise en application ou exécution ultérieure.

L'affectation de la valeur logique au booléen est effectuée préalablement à la validation de la transaction. Après la validation de transaction, les codes ou les données nécessaire à l'application de l'ensemble de règles peuvent par exemple être téléchargés et/ou exécutés.

Ainsi, la transaction vers le client de serveur ne peut être effectuée que s'il a préalablement été vérifié que les ressources nécessaires étaient bien disponibles ou selon d'autres critères que les clients de serveur sont susceptibles d'apprécier, tels que l'état du réseau (par exemple le trafic) ou d'une partie du réseau. On évite ainsi un échec ou une erreur pendant l'approvisionnement (par exemple lors du téléchargement) ou après l'approvisionnement (lors de la mise en application), qui nécessiterait une opération de désapprovisionnement inutilement longue et coûteuse. En outre, l'utilisation d'un mécanisme de transaction visant un ensemble de règles garanti l'atomicité de l'ensemble de règles devant être approvisionnées par le PDP. L'atomicité de l'ensemble vaut tant à l'étape de réponse à la requête (par exemple lorsqu'un PEP vérifie que les ressources nécessaires sont bien disponibles) qu'à l'étape de la validation de transaction, laquelle entraîne une mise en application des règles.

Dans une variante, la réponse du client au serveur est implicite. Dans un tel cas, le serveur considère que la réponse du client est une réponse par défaut et ce, à l'issue d'un laps de temps prédéterminé. Par exemple, la réponse par défaut peut être favorable et si le serveur ne reçoit pas de contrordre durant le laps de temps prédéterminé, il considère que la réponse est favorable à l'issu de ce laps de temps.

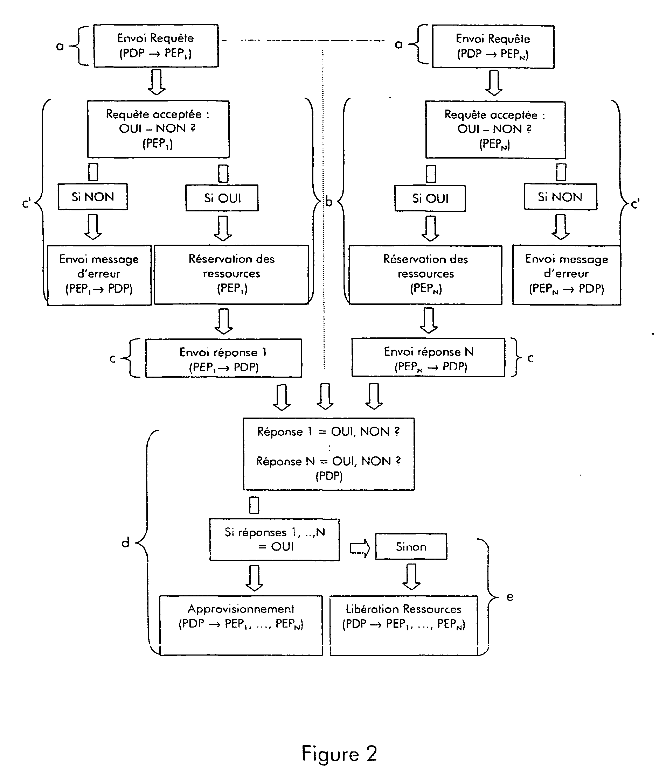

La figure 2 est un organigramme illustrant des étapes du procédé selon l'invention, impliquant cette fois un serveur et plusieurs clients de serveur. En effet, il convient de comprendre l'invention de la sorte que si le réseau comprend N clients de serveurs ou PDPs (N étant un nombre entier quelconque), une requête est envoyée par le serveur à chacun des clients ou PEPs (étape a), soit un total de N requêtes. Entre 0 et N réservations de ressources sont effectuées parmi les N clients de serveur, se!on la disponibilité de ces ressources (étape b) puis une réponse est envoyée par chacun des clients, soit un total de N réponses. Par exemple, booléens se voient affecté une valeur logique correspondant à la réponse. Ensuite, les N réponses sont envoyées vers le serveur (étape c) et la transaction n'est validée au niveau du serveur (étape d d'approvisionnement) que si les N réponses, examinées par le serveur sont favorables. Les avantages qui découlent de l'invention sont ainsi d'autant plus grands que N est grand. Eventuellement, chacun des clients de serveur est susceptible d'envoyer un message d'erreur lorsque la requête envoyée à l'étape a n'est pas acceptée au niveau de chacun de ces clients (étape c'). Le serveur dispose alors des informations nécessaires pour éventuellement transmettre ces informations à une autre entité du réseau, capable d'analyser la cause d'erreur.

En outre, lorsque l'un au moins des clients a refusé la requête envoyée à l'étape a, le serveur peut commander la libération des ressources (étape e) précédemment réservées parmi tous clients ayant précédemment accepté la requête. Dans le présent mode de réalisation, cette étape de libération des ressources réservées par les clients ayant accepté la requête peut être signifiée explicitement par le serveur par l'envoi d'un message approprié aux clients de serveur.

Dans une variante, l'étape de libération des ressources peut être effectuée de façon automatique, c'est-à-dire sans nécessiter d'envoi de message par le serveur au client, à l'issu d'un délai d'attente prédéterminé. Lorsque ce délai est écoulé, chaque client de serveur libère les ressources précédemment réservées.

Le procédé selon l'invention peut en outre comprendre une modification de la requête et de retour à la première étape si la réponse est non favorable. C'est-à-dire que si un PEP au moins refuse la requête de transaction (par exemple, la valeur attribuée au(x) booléen(s) correspondant(s) est dans ce cas NON), celle-ci n'est ensuite pas validée par le PDP et l'approvisionnement n'est pas effectué. Le PDP peut néanmoins informer une entité de réseau (telle qu'un gestionnaire de règles) de cet échec. Le gestionnaire de règles peut alors créer ou modifier une ou plusieurs règles, transmettre ces règles créées ou modifiées au PDP qui peut ensuite soumettre une nouvelle requête au(x) PEP(s).

Une alternative peut être de ne pas modifier la requête mais de simplement la soumettre à nouveau après un délai de temporisation.

De telles opérations permettent de soumettre à nouveau la requête après une analyse de la cause d'échec et ce, avant que l'opération d'approvisionnement de règles ne se produise. Ainsi, (i) un désapprovisionnement peut être évité, (ii) la possibilité est en outre donnée de modifier la requête ou de temporiser en vue de la soumettre à nouveau avec succès et (iii) l'atomicité de l'ensemble de règles est garantie. En particulier, la modification peut viser une adaptation de la requête en fonction des ressources disponibles des clients, éventuellement en temps réel, selon par exemple les conditions d'utilisation de la partie de réseau concernée (telles que le trafic).

À cette fin, le procédé selon l'invention peut en outre comprendre une étape c' d'envoi d'un message d'erreur depuis le ou les client(s) de serveur au serveur si la réponse du ou des client(s) est non favorable. Cette étape est postérieure à l'étape b. Une telle étape est de nature à informer le PDP des raisons pour lesquelles une réponse défavorable est émise pour la requête.

Le PDP a ensuite la possibilité d'envoyer à son tour un message à une autre entité du réseau, telle qu'un gestionnaire de politiques ou de règles (étape c"). Ce message peut comprendre au moins une partie de l'information contenue dans le ou les messages d'erreur envoyé(s) à l'étape c'. L'entité du réseau recevant le message envoyé par le PDP peut être dotée des outils nécessaires à l'analyse de la cause d'échec.

Pour ce faire, le procédé peut en outre comprendre une étape de comparaison du message d'erreur à une base de donnée contenant des messages d'erreur types. Une telle comparaison peut être effectuée au niveau d'une entité de réseau telle qu'un gestionnaire de règles et peut éventuellement être élaborée. On entend par-là que des caractéristiques du message d'erreur peuvent être analysées de sorte à permettre la sélection dans la base de donnée d'un message type offrant une correspondance optimale avec le message d'erreur envoyé. Le cas échéant, un message d'échec peut être sélectionné si le message type optimal est rejeté, lorsqu'il est par exemple jugé que la correspondance n'est pas satisfaisante. Cette étape de sélection permet donc de sélectionner un message type approprié. Aux messages types contenus dans la base de données correspondent des routines types permettant de solutionner l'erreur ou, tout au moins, permettant une action appropriée. Lorsqu'un message est sélectionné dans la base de données, l'entité de réseau peut commander l'exécution de la routine type associée. Des règles peuvent ainsi être crées ou modifiée lors de l'exécution de la routine type sélectionnée avant d'être transmises à un PDP en vue de l'envoi d'une nouvelle requête. Cette création ou modification de règles s'effectue donc de façon optimale vis à vis de l'expérience déjà acquise en matière d'échec d'approvisionnement.

Le réseau peut en outre comprendre plusieurs éléments de réseau (voire des agents de réseau) étant eux-mêmes clients du PEP. En tant que tels, ces éléments sont à même de communiquer avec le PEP. Aussi est-il avantageux de prévoir que la réponse du PEP soit effectuée suite à une étape de communication entre le PEP et les éléments de réseau ou suite à la consultation par le PEP d'un gestionnaire d'éléments de réseau. Un tel gestionnaire peut en effet assurer des opérations de configuration et de maintenance des éléments du réseau, à l'instar d'une application de couche gestion d'élément ou EML (de « Element Manager Layer »). Ses fonctions font que le gestionnaire d'éléments connaît l'état des éléments et ce, éventuellement en temps réel. Le consulter permet donc au PEP de connaître à son tour l'état des éléments du réseau et, sur la base de cette information, former une réponse favorable ou non, c'est-à-dire accepter ou rejeter la requête.

Éventuellement, le gestionnaire d'éléments peut faire partie intégrante du PEP, c'est-à-dire que le PEP peut être capable d'accomplir des tâches spécifiques à un gestionnaire d'éléments de réseau. Dans un tel cas, le PEP connaît l'état des éléments du réseau et ce, éventuellement en temps réel. Le PEP peut donc accepter ou rejeter la requête sur la base de la connaissance qu'il a des éléments du réseau.

Le PEP peut donc accepter ou rejeter la requête après avoir pris connaissance de l'état de la partie de réseau dont il a la gestion. En particulier, l'état de cette partie de réseau concerne les ressources disponibles dans cette partie. Ainsi, (i) une acceptation ou un rejet de la requête peut avoir lieu en connaissance de l'état des éléments de réseau clients du PEP au moment de la réception de la requête par le PEP, (ii) un désapprovisionnement est évité, et (iii) l'atomicité de la transaction de règles est garantie.

L'invention n'est cependant pas limitée aux variantes décrites ci-avant mais est susceptible de nombreuses autres variations aisément accessibles à l'homme du métier.

## Revendications

1. Procédé de transaction pour un approvisionnement de règles dans un réseau comprenant :
- un serveur de règles ; et
- un client de serveur ;
le procédé de transaction comprenant les étapes :
(a) d'envoi depuis le serveur vers le client d'une requête en acceptation d'un approvisionnement d'un ensemble de règles ;
(b) si la requête est acceptée par le client, de réservation par le client des ressources nécessaires à la réception et à la mise en application des règles ;
(c) de réponse à la requête, du client au serveur ; et
(d) si la réponse de l'étape (c) est favorable, d'approvisionnement de l'ensemble de règles depuis le serveur au client.

2. Procédé selon la revendication 1, le réseau comprenant plusieurs clients, dans lequel les étapes (a), (b) et (c) sont effectuées pour chacun des clients, répondant chacun à la requête du serveur lors de l'étape (c), et dans lequel l'étape (d) d'approvisionnement n'est effectuée que si choque réponse de client est favorable.

3. Procédé selon la revendication 2, comprenant en outre une étape :
(e) de libération des ressources réservées par les clients à l'étape
(b) si une réponse de client n'est pas favorable.

4. Procédé selon la revendication 1 à 3, comprenant en outre une étape :
(c') d'envoi d'un message d'erreur depuis le client au serveur si la réponse à la requête n'est pas favorable.

5. Procédé selon la revendication 4, le réseau comprenant en outre :
- un gestionnaire de règles ;
lequel comprend en outre une étape :
(c") d'envoi depuis le serveur vers le gestionnaire de règles d'un message comprenant au moins une partie d'information contenue dans le message d'erreur envoyé à l'étape (c').

6. Procédé selon l'une quelconque des revendications 1 à 5, le réseau comprenant en outre :
- plusieurs éléments de réseaux, clients du client de serveur ; et
- un gestionnaire d'éléments de réseaux ;
dans lequel la réservation des ressources par le client à l'étape (b) est effectuée suite à une étape préalable :
(a') de communication entre le client de serveur et le gestionnaire d'éléments de réseaux.

7. Procédé selon la revendication précédente, le gestionnaire d'éléments de réseaux faisant partie intégrante du client de serveur, dans lequel l'étape (a') de communication est une opération interne au client de serveur.

8. Serveur de règles disposant de moyens pour mettre en oeuvre le procédé selon l'une des revendications 1 à 7.

## Claims

1. A transaction method for supplying rules within a network, comprising:
- a rules server; and
- a server client;
the transaction method comprising the steps of:
(a) sending, from the server to the client, a request to accept a supply of a set of rules;
(b) if the request is accepted by the client, the client reserving the resources needed to receive and enact the rules;
(c) replying to the request, from the client to the server; and
(d) if the reply in step (c) is favorable, supplying the set of rules from the server to the client.

2. A method according to claim 1, the network comprising multiple clients, wherein steps (a), (b), and (c) are performed for each of the clients, each replying to the request from the server in step (c), and wherein the step of supplying (d) is only performed if each client reply is favorable.

3. A method according to claim 2, further comprising a step of:
(e) freeing up the resources reserved by the clients in step (b) if a client reply is not favorable.

4. A method according to claim 1 to 3, further comprising a step of:
(c') sending an error message from the client to the server if the reply to the request is not favorable.

5. A method according to claim 4, the network further comprising:
- a rules manager;
and which further comprises a step of:
(c") sending from the server to the rules manager a message comprising at least one portion of information contained within the error message sent in step (c').

6. A method according to one of the claims 1 to 5, the network further comprising:
- multiple network elements, which are clients of the server client; and
- a network element manager;
wherein the reservation of resources by the client in step (b) is performed in response to a prior step of:
(a') communication between the server client and the network element manager.

7. A method according to the preceding claim, the network element manager forming an integral part of the server client, wherein step (a') of communication is an operation internal to the server client.

8. A rules server having means to implement the method according to one of the claims 1 to 7.

## Patentansprüche

1. Transaktionsverfahren zur Bereitstellung von Richtlinien in einem Netzwerk, welches umfasst:
- Einen Richtlinienserver; und
- einen Server-Client;
wobei das Transaktionsverfahren die folgenden Schritte umfasst:
(a) Senden, vom Server an den Client, einer Anforderung für die Akzeptierung der Bereitstellung einer Gesamtheit von Richtlinien;
(b) wenn die Anforderung vom Client akzeptiert wird, Reservierung, durch den Client, der für den Empfang und die Anwendung der Richtlinien erforderlichen Ressourcen;
(c) Antwort auf die Anforderung vom Client an den Server; und
(d) wenn die Antwort in Schritt (c) positiv ist, Bereitstellen der Gesamtheit von Richtlinien vom Server an den Client.

2. Verfahren nach Anspruch 1, wobei das Netzwerk mehrere Clients umfasst, wobei die Schritte (a), (b) und (c) für einen jeden der Clients, welche jeweils in Schritt (c) auf die Anforderung des Servers antworten, durchgeführt werden, und wobei der Schritt (d) des Bereitstellens nur durchgeführt wird, wenn die Antwort aller Clients positiv ist.

3. Verfahren nach Anspruch 2, weiterhin den folgenden Schritt umfassend:
(e) Freigeben der vom Client in Schritt (b) reservierten Ressourcen, wenn eine Antwort eines Clients nicht positiv ist.

4. Verfahren nach den Ansprüchen 1 bis 3, weiterhin den folgenden Schritt umfassend:
(c') Senden einer Fehlermeldung vom Client an den Server, wenn die Antwort auf die Anforderung nicht positiv ist.

5. Verfahren nach Anspruch 4, wobei das Netzwerk weiterhin umfasst:
- Eine Richtlinienverwaltungseinrichtung;
wobei das Verfahren weiterhin den folgenden Schritt umfasst:
(c") Senden, vom Server an die Richtlinienverwaltungseinrichtung, einer Meldung, welche mindestens einen Teil der in der in Schritt (c') gesendeten Fehlermeldung enthaltenen Informationen umfasst.

6. Verfahren nach einem beliebigen der Ansprüche 1 bis 5, wobei das Netzwerk weiterhin umfasst:
- Mehrere Netzwerkelemente, Clients des Server-Clients, und
- eine Netzwerkelementverwaltungseinrichtung;
wobei die Reservierung der Ressourcen durch den Client in Schritt (b) im Anschluss an den folgenden vorherigen Schritt erfolgt:
(a') Kommunikation zwischen dem Server-Client und der Netzwerkelementverwaltungseinrichtung.

7. Verfahren nach dem vorstehenden Anspruch, wobei die Netzwerkelementverwaltungseinrichtung ein Bestandteil des Server-Clients ist, wobei der Schritt (a') der Kommunikation eine interne Operation im Server-Client ist.

8. Richtlinienserver mit Mitteln zum Durchführen des Verfahrens gemäß einem der Ansprüche 1 bis 7.
